# EUROPÄISCHE PATENTSCHRIFT

(11) **EP 0 389 744 B1**
(45) Veröffentlichungstag und Bekanntmachung des Hinweises auf die Patenterteilung: **05.01.1994**
(21) Anmeldenummer: 90100969.6
(22) Anmeldetag: 18.01.1990
(51) Int. Cl.: G09F 9/35, G02F 1/133

(54) **Anzeigevorrichtung**
Display device
Dispositif à affichage

(30) Priorität: 31.03.1989 DE 3910418
(43) Veröffentlichungstag der Anmeldung: 03.10.1990
(73) Patentinhaber: Licentia Patent-Verwaltungs-GmbH, 60596 Frankfurt (DE)
(72) Erfinder: Holz, Hermann, Dipl.-Ing., D-7904 Erbach (DE); Salzmann, Rolf, D-7901 Berghülen (DE); Wiemer, Wolfram, Dr. rer. nat., D-7906 Blaustein (DE)
(74) Vertreter: Amersbach, Werner, Dipl.-Ing.

(56) Entgegenhaltungen:
- EP-A- 0 179 913
- PATENT ABSTRACTS OF JAPAN, Band 9, Nr. 259 (P-397)[1982], 17. Oktober 1985, Seite 83 P 397; & JP-A-60 108 820 (SUWA SEIKOSHA K.K.) 14-06-1985

## Beschreibung

Die vorliegende Erfindung betrifft eine Anzeigevorrichtung nach dem Oberbegriff des Patentanspruchs 1.

Eine solche Anzeigevorrichtung ist z. B. aus der GB-A-21 51 832 bekannt. Bei Flüssigkristall-Anzeigevorrichtungen werden die beiden das Flüssigkristallmaterial einschließenden Deckplatten am Umfang hermetisch miteinander verbunden. Ordnet man mehrere solcher Matrixanzeigen nebeneinander an, treten häufig zwischen den einzelnen Vorrichtungen vergrößerte Abstände zwischen den Matrixsegmenten störend in Erscheinung.

Der vorliegenden Erfindung liegt die Aufgabe zugrunde, bei solchen Reihen von Matrixanzeigen die vergrößerten Abstände weniger störend in Erscheinung treten zu lassen.

Diese Aufgabe wird durch die im Kennzeichen des Patentanspruchs 1 angegebenen Merkmale gelöst.
Die Erfindung geht davon aus, daß es im Gesamteindruck einer solchen Anzeigezeile weniger störend wirkt, wenn Anzeigesegmente in der Breite verringert sind, als wenn die Abstandsperiodizität gestört wird.

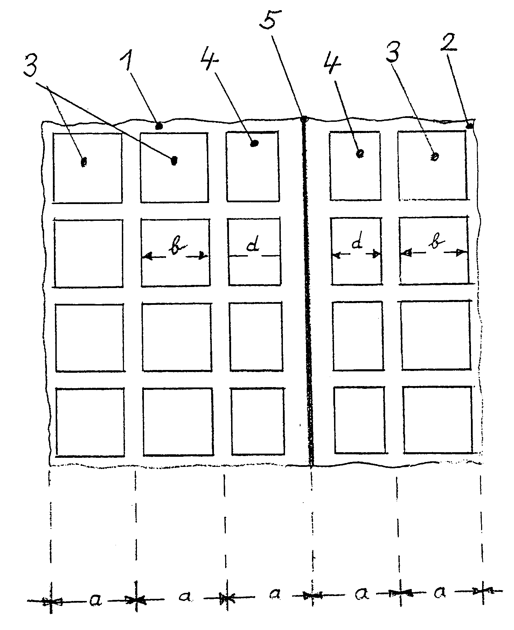

Anhand der in der Figur dargestellten schematischen Aufsichtsausschnitte wird die Erfindung nachfolgend näher erläuert.

Die Figur zeigt zwei in Zeilenrichtung nebeneinanderliegende Ausschnitte von Matrix-Flüssigkristall-Anzeigevorrichtungen 1, 2 mit rechteckigen Anzeigesegmenten 3 und 4. Die Anzeigesegmente 3 der mittleren Spalten einer jeden Anzeigevorrichtung 1, 2 besitzen eine größere Breite b als die, die äußeren Spalten bildenden Anzeigesegmente 4 mit ihrer verringerten Breite d. Mit 5 ist die Stoßkante zwischen den beiden benachbarten Anzeigevorrichtungen 1 und 2 bezeichnet.

Die Verringerung der Breite d der Anzeigesegmente 4 in den äußeren Spalten der Anzeigevorrichtungen 1 und 2 ist zweckmäßig so gewählt, daß das Rastermaß erhalten bleibt, d. h. die Mittelabstände a der Lücken zwischen den Anzeigesegmenten 3, 4 im wesentlichen über die gesamte Zeile betrachtet, gleich groß sind.

## Patentansprüche

1. Anzeigevorrichtung auf Flüssigkristallbasis mit matrixförmig angeordneten rechteckigen Anzeigesegmenten mit äußeren u.mittleren Spalten, deren seitlicher Rand- und Begrenzungsbereich derart ausgebildet ist, daß mehrere solcher Anzeigevorrichtungen zwecks Bildung einer Anzeigezeile aneinandersetzbar sind, dadurch gekennzeichnet, daß die Anzeigesegmente zumindest einer der äußeren Spalten eine geringere Breite aufweisen als die Anzeigesegmente der mittleren Spalten, und daß die Breite der Anzeigesegmente der mittleren Spalten und die Höhe aller Anzeigeelemente gleich sind.

2. Anzeigevorrichtung nach Anspruch 1, dadurch gekennzeichnet, daß die Anzeigesegmente der mittleren Spalten quadratische Form aufweisen.

3. Anzeigevorrichtung nach Anspruch 1 oder Anspruch 2, dadurch gekennzeichnet, daß die Breite der Anzeigesegmente der äußeren Spalten 5 bis 25 %, insbesondere 10 bis 20 %, geringer ist als die Breite der Anzeigesegmente der mittleren Spalten.

4. Anzeigevorrichtung nach einem der Ansprüche 1 bis 3, dadurch gekennzeichnet, daß die Breitenverringerung der Anzeigesegmente der äußeren Spalten derart gewählt ist, daß über eine, aus mehreren nebeneinander angeordenten Anzeigevorrichtungen bestehende Anzeigeteile betrachtet, das Rastermaß der Anzeigesegmente gleichmäßig ist.

## Claims

1. Display device on a liquid crystal basis with rectangular indicating segments which are arranged in the form of a matrix, have outer and middle columns and the lateral edge and boundary region of which is arranged in such a manner that several such display devices can be placed against one another for the purpose of formation of a display line, characterised thereby that the indicating segments of at least one of the outer columns have a smaller width than the indicating segments of the middle columns and that the width of the indicating segments of the middle columns and the height of all indicating elements are the same.

2. Indicating device according to claim 1, characterised thereby that the indicating segments of the middle columns have a square shape.

3. Indicating device according to claim 1 or claim 2, characterised thereby that the width of the indicating segments of the outer columns is 5 to 25%, especially 10 to 20%, smaller than the width of the indicating segments of the middle columns.

4. Indicating device according to one of claims 1 to 3, characterised thereby that the width reduction of the indicating segments of the outer columns is selected in such a manner that the raster dimension of the indicating segments is equal seen over a display member consisting of a plurality of adjacently arranged display devices.

## Revendications

1. Dispositif d'affichage à base de cristaux liquides, à secteurs d'affichage rectangulaires disposés en forme de matrice, présentant des colonnes extérieures et des colonnes médianes dont la zone de bordure et de limitation latérale est conçue de façon que plusieurs de ces dispositifs d'affichage puissent se placer l'un à côté de l'autre pour former une ligne d'affichage, dispositif caractérisé par le fait que les secteurs d'affichage d'au moins l'une des colonnes extérieures présentent une largeur moindre que les secteurs d'affichage des colonnes médianes, et par le fait que la largeur des secteurs d'affichage des colonnes médianes et la hauteur de tous les éléments d'affichage sont égales.

2. Dispositif d'affichage selon la revendication 1, caractérisé par le fait que les secteurs d'affichage des colonnes médianes présentent une forme carrée.

3. Dispositif d'affichage selon la revendication 1 ou la revendication 2, caractérisé par le fait que la largeur des secteurs d'affichage des colonnes extérieures est moindre, de 5 à 25%, en particulier de 10 à 20%, que la largeur des secteurs d'affichage des colonnes médianes.

4. Dispositif d'affichage selon l'une des revendications 1 à 3, caractérisé par le fait que l'on choisit la diminution de largeur des secteurs d'affichage des colonnes extérieures de façon que, sur une ligne d'affichage, constituée de plusieurs dispositifs d'affichage disposés l'un à côté de l'autre, la cote de trame des secteurs d'affichage soit constante.
